# EUROPEAN PATENT SPECIFICATION

(11) **EP 1 409 753 B1**
(45) Date of publication and mention of the grant of the patent: **16.08.2006**
(21) Application number: 01940020.9
(22) Date of filing: 13.06.2001
(51) Int. Cl.: C22B 3/26, C22B 3/38, C22B 3/40, C22B 19/00, C22B 23/00, C22B 3/00

(54) **SOLVENT EXTRACTION OF IMPURITIES FROM CONCENTRATED METAL SULPHATE SOLUTIONS**
LÖSUNGSMITTELEXTRAKTION VON VERUNREINIGUNGEN AUS KONZENTRIERTEN METALLSULFATLÖSUNGEN
EXTRACTION PAR SOLVANT DES IMPURETES PRESENTES DANS DES SOLUTIONS DE SULFATE METALLIQUE CONCENTREES

(30) Priority: 13.06.2000 AU PQ812700
(43) Date of publication of application: 21.04.2004
(73) Proprietor: WMC Resources Ltd, Perth, W.A. 6000 (AU)
(72) Inventor: O'CALLAGHAN, John, KALAMUNDA, Western Australia 6076 (AU); CHAMBERLAIN, Anthony, KENWICK, Western Australia 6107 (AU)
(74) Representative: Kador & Partner
(86) International application number: PCT/AU2001/000696
(87) International publication number: WO 2001/096621

(56) References cited:
- WO-A-01/48252
- WO-A-98/56482
- CA-A- 1 024 751
- GB-A- 2 324 792
- US-A- 4 348 367
- US-A- 5 447 552
- US-A- 5 779 997
- US-A- 5 855 858

## Description

### FIELD OF THE INVENTION

The present invention relates generally to a method of removing impurity metals from an impure valuable metal sulphate stream in a solvent extraction circuit. More particularly, the invention relates to the extraction of cobalt and/or zinc from a concentrated nickel sulphate liquor.

### BACKGROUND TO THE INVENTION

In the processing of nickel laterites, nickel and cobalt are selectively separated from a wide range of impurities by mixed (Ni/Co) sulphide precipitation. This mixed sulphide is then re-leached using temperature and oxygen over pressure. The resulting leach solution is acidic and usually has concentration ranging from 60 - 120 g/L nickel and 5 -15 g/L cobalt, together with other impurities like copper and zinc. Similarly concentrated leach solutions can also be obtained from the pressure leaching of nickel sulphide concentrates with oxygen. After neutralisation of the acid cobalt can then be separated from nickel via solvent extraction. Cyanex 272 is typically used to selectively extract cobalt over nickel in a sulphate matrix at a fixed pH. However the extraction of cobalt is a cation exchange reaction which releases protons from the reagent which must be neutralised as this extraction is pH sensitive. Ammonia is typically used as the neutralising solution both to raise the pH prior to solvent extraction, and to maintain a constant pH during extraction. The main problem with the use of ammonia in this instance is the precipitation of nickel ammonium sulphate, more commonly known as nickel double salts, when dealing with solutions containing high nickel and ammonium sulphate concentrations. For this reason, the feed solution is usually diluted to 50-70 g/L nickel strength to prevent the formation of nickel double salts.

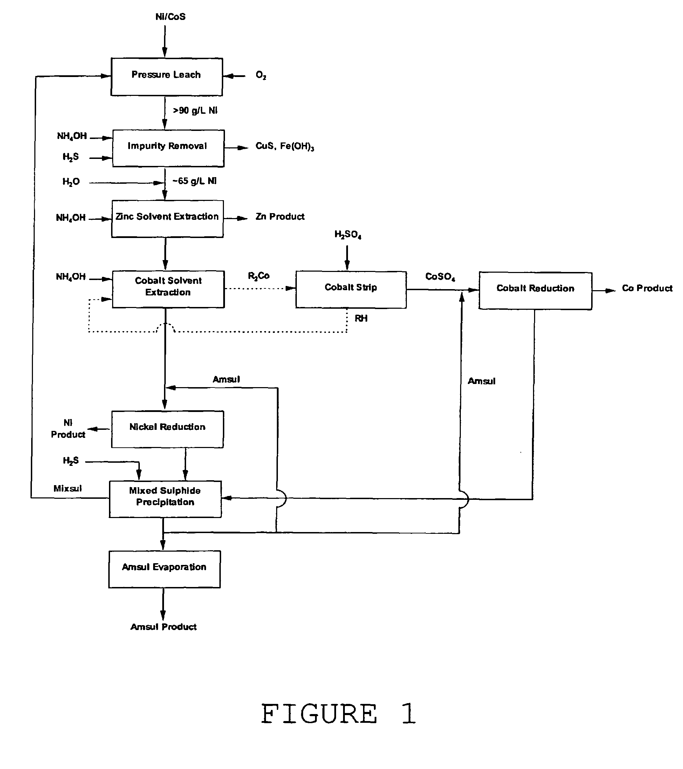

Figure 1 is a conventional process flowsheet for refining a mixed sulphide showing the extraction of cobalt from a nickel sulphate solution with a direct addition of ammonia to a cobalt solvent extraction circuit. The direct addition of ammonia to the concentrated nickel sulphate solution results in the formation of insoluble nickel ammonium sulphate double salts.

Australian patent No. 667539 by outokumpu describes a two stage process which avoids the formation of this double salt by: .
(i) pre-neutralisation of a cationic extractant such as Cyanex 272 to form the ammonium salt; and
(ii) pre-extraction or exchange of the Cyanex 272 ammonium salt with magnesium sulphate in an aqueous solution to form a Cyanex 272 magnesium salt which is contacted with an aqueous nickel sulphate solution in a solvent extraction circuit so as to extract nickel.

Another means of avoiding double salt formation is described in the specification of the applicant's International patent application No. PCT/AU98/00457. This avoids the relatively expensive two stage pre-equilibration proposed by patent No. 667539 by adding chemically reactive magnesia, magnesium hydroxide, or magnesium carbonate to the cationic extractant without the pre-neutralisation step. However, if magnesia or magnesium pre-equilibrated extractant is used to avoid the formation of double salts this introduces magnesium ions that contaminates the final ammonium sulphate product.

US-A-4 348 367 discloses an extractant comprising an organic-soluble phosphinic acid for a solvent extraction process for the separation of cobalt from nickel, most of the cobalt being stripped from the extractant with a mineral acid. The solvent extraction was carried out at 50°C. This is the upper limit of the conventional solvent extraction temperature range.

### SUMMARY OF THE INVENTION

According to the present invention there is provided a method of removing impurity metals from an impure concentrated valuable metal sulphate stream in a solvent extraction circuit, said method involving contacting the impure concentrated valuable metal sulphate stream with a cationic solvent extractant, in the solvent extraction circuit operated at a relatively high temperature of greater than 60°C which is effective in increasing the solubility of the valuable metal in the concentrated sulphate stream containing ammonium sulphate, said extraction circuit also being operated whereby one or more of the impurity metals is loaded on the cationic solvent extractant using ammonia to control the pH whilst a raffinate of the solvent extraction circuit which contains the valuable metal is enriched in ammonium sulphate.

Conventionally when ammonia serves as the neutralising agent with concentrated nickel sulphate liquors, insoluble nickel salts such as nickel ammonium sulphate double salts may be formed. According to an embodiment of the invention, the formation of insoluble valuable metal salts is avoided by operating the solvent extraction circuit at significantly higher temperatures than is conventionally practised, and by using kerosene diluents with significantly higher flash point temperatures.

Generally the impure valuable metal sulphate stream is a nickel sulphate liquor, for example that obtained by acid/oxygen pressure leaching of a nickel-cobalt sulphide concentrate or a mixed nickel/cobalt sulphide precipitate obtained during the processing of nickel lateritic ores.

More preferably the high temperature is between about 80 to 100°C.

Typically the nickel sulphate liquor is a relatively concentrated liquor. More typically the nickel sulphate liquor contains at least about 60 g/L Ni.

Preferably the cationic solvent extractant is mixed with an organic diluent of a relatively high flash point. More preferably the organic diluent is a paraffin based diluent such as that commercially available as ISOPAR V.

Typically the solvent extraction circuit is designed to remove one or two of said impurity metals, respectively, from the nickel sulphate liquor. More typically two extraction circuits are designed to remove Zn and Co, respectively, from the nickel sulphate liquor.

Preferably the cationic solvent extractant comprises a phosphinic acid such as a bis (2,4,4 trimethylpentyl) phosphinic acid, for example that commercially available as CYANEX 272.

Generally the impurity metals include Co, Zn, Fe, Al, Cr and Cu.

### BRIEF DESCRIPTION OF THE DRAWINGS

In order to achieve a better understanding of the nature of the present invention, a preferred embodiment of a method of removing impurity metals from an impure concentrated valuable metal sulphate stream in a solvent extraction circuit will now be described, by way of example only, with reference to the following drawings:
Figure 1 is a conventional refinery flow sheet for treating nickel sulphate leach liquors;
Figure 2 is a two stage zinc/cobalt solvent extraction recovery circuit;
Figure 3 is a pH extraction isotherm at a temperature of 85°C for Cyanex 272 in a preferred high flash point temperature diluent using an impure concentrated nickel sulphate liquor;
Figure 4 is a comparative pH extraction isotherm at 50°C for Cyanex 272 in Shellsol 2046 kerosene diluent for an impure nickel sulphate liquor; and
Figures 5 to 8 are nickel solubility plots at 50°C, 60°C, 70°C and 80°C which show the relative solubility of a range of nickel sulphate solutions in the presence of various ammonium sulphate concentrations.

### DETAILED DESCRIPTION OF THE PREFERRED EMBODIMENT

According to one embodiment of a process for the solvent extraction of impurity metals from a concentrated nickel sulphate liquor the solvent extraction circuit is operated at a temperature exceeding 60°C being the maximum temperature at which solvent extraction circuits conventionally operate. This is now feasible with the availability of high flash point diluents and the commercialisation of pulse columns. This will for example enable the conventional process flowsheet shown in Figure 1 to be operated at high nickel strengths and avoid dilution of the nickel process stream prior to cobalt removal. It has been found in one embodiment that by operating the solvent extraction circuit at 85°C ammonium sulphate concentrations above 50 g/L can be tolerated at nickel strengths of 90 - 100 g/L.

A cationic solvent extractant Cyanex 272 (a phosphinic acid), was used in this example together with an isoparaffin diluent ISOPAR V. An impure valuable metal sulphate stream in this example is a nickel sulphate liquor which was produced from pressure leaching a mixed sulphide which in turn had been produced by treating a nickel laterite leach liquor with hydrogen sulphide. The liquor composition is shown in Table 1.

**Table 1 - Impure Nickel Sulphate Solution Composition (g/L)**

| Ni | Co | Zn | Cu | Mn | Fe | Cr | Ca | Al | S | Amsul |
|---|---|---|---|---|---|---|---|---|---|---|
| 103 | 8.78 | 0.634 | 0.002 | 0.012 | 0.246 | 0.063 | 0.060 | 0.082 | 68.0 | 21.7 |

Cyanex 272 extractant is a phosphinic acid that is highly selective in the separation of zinc and cobalt from nickel. When in its protonated form (H⁺) the pH decreases as the zinc or cobalt is extracted and exchanges with the hydrogen ion according to the following reaction:

2R₂POO⁻H⁺ + M²⁺ ⇔ (R₂POO⁻)₂M²⁺ + 2H⁺ (1)

where, M = Zn or Co.

The acid generated from the reaction is neutralised with ammonia to form ammonium sulphate.

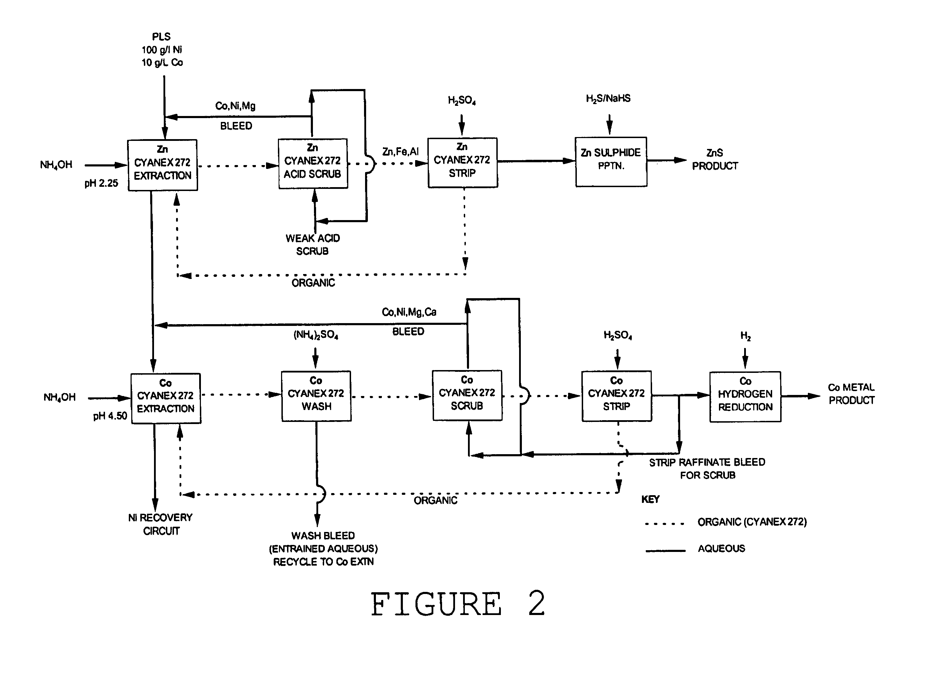

Figure 2 shows a two step solvent extraction circuit to remove impurity metals of zinc and cobalt selectively from a valuable metal of nickel. In order to selectively extract zinc there must be sufficient separation between zinc and cobalt in the Cyanex 272 system. Similarly for cobalt from nickel, the separation factor must be of sufficient magnitude to obtain a pure nickel product. The separation factor is dependent on a number of variables including temperature, aromatic content of diluent, and extractant concentration. In the case of nickel hydrogen reduction up to 2 g/L cobalt can be present in the nickel reduction feed without causing any significant technical issues. In the case of nickel electrowinning less than 10ppm cobalt can be present in the nickel catholyte to result in the production of off-spec LME nickel.

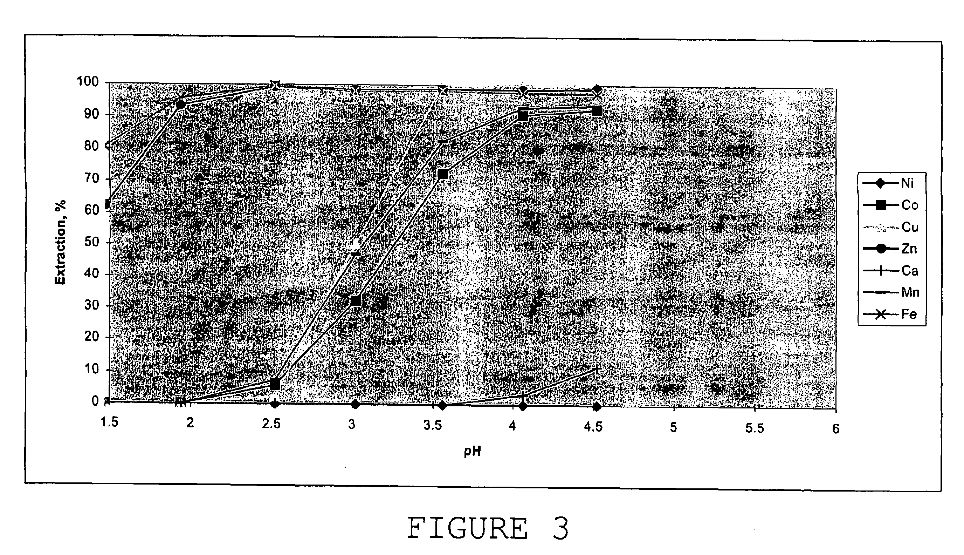

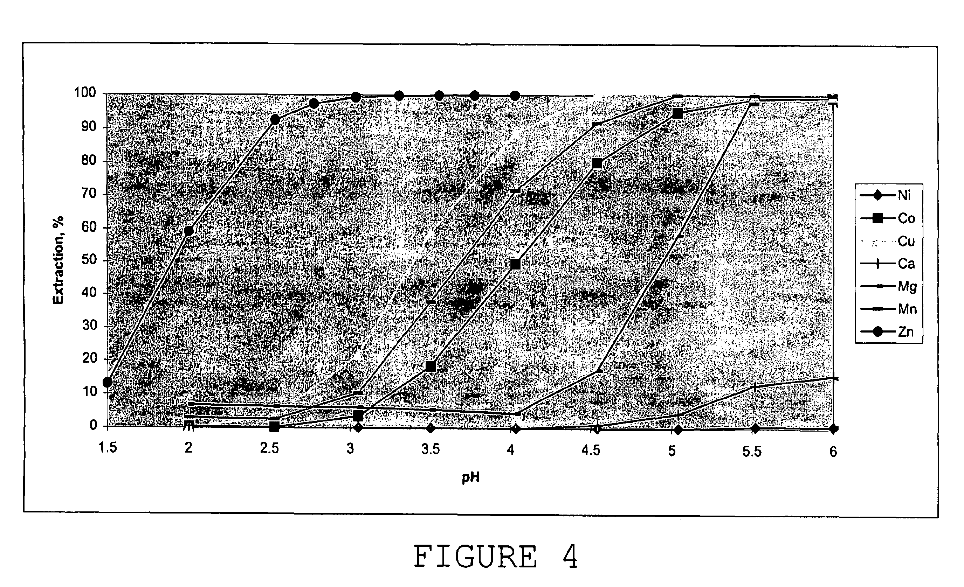

The extraction pH isotherms were constructed to determine the optimum operating pH during extraction. Figure 3 shows the pH extraction isotherm according to one embodiment of the invention obtained at a temperature of 85°C for 0.85M Cyanex 272 in ISOPAR V using a concentrated feed solution containing about 103 g/L Ni and 9 g/L Co. Figure 4 shows a comparative pH extraction isotherm for 0.45M Cyanex 272 in Shellsol 2046 obtained at 50°C using the impure feed solution diluted to a nickel concentration of 65 g/L. As mentioned above the separation factor of Cyanex 272 is dependent on the temperature of the extraction and the aromatic content of the diluent. The two extraction isotherms of Figures 3 and 4 indicate a shift to the left with an increase in temperature and lower aromatic content of the diluent according to the preferred method of the invention.

The bench scale tests indicated that selective extraction of zinc over cobalt is possible with Cyanex 272. It is envisaged that this stage will be controlled between pH 2.00 and 2.25. A certain amount of zinc can be tolerated in the cobalt and nickel reduction feed. This zinc would be precipitated at the end of hydrogen reduction as a mixed sulphide. It is anticipated that any co-extracted cobalt will be recovered in the scrub circuit and recycled to extraction as shown in Figure 3.

Cobalt can be selectively extracted from nickel in the pH range of 4.00 to 4.50. Any Fe, Cu, Zn, Mn and Mg remaining in the liquor will be fully loaded onto the organic with the cobalt. However, these impurities should be present at very low levels.

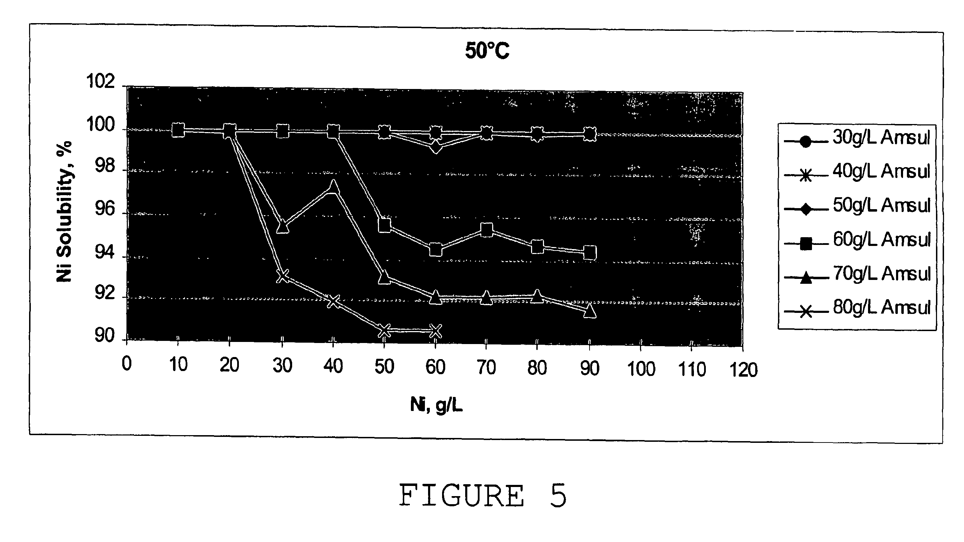

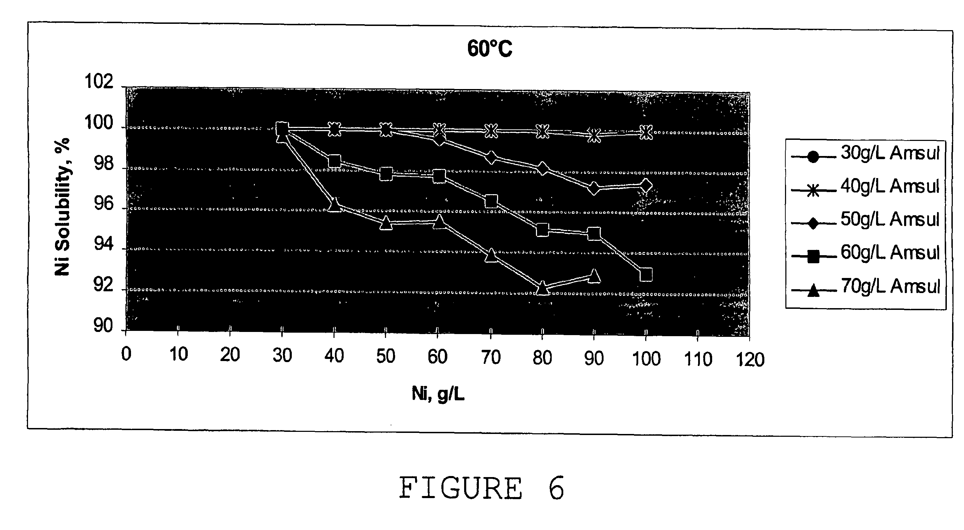

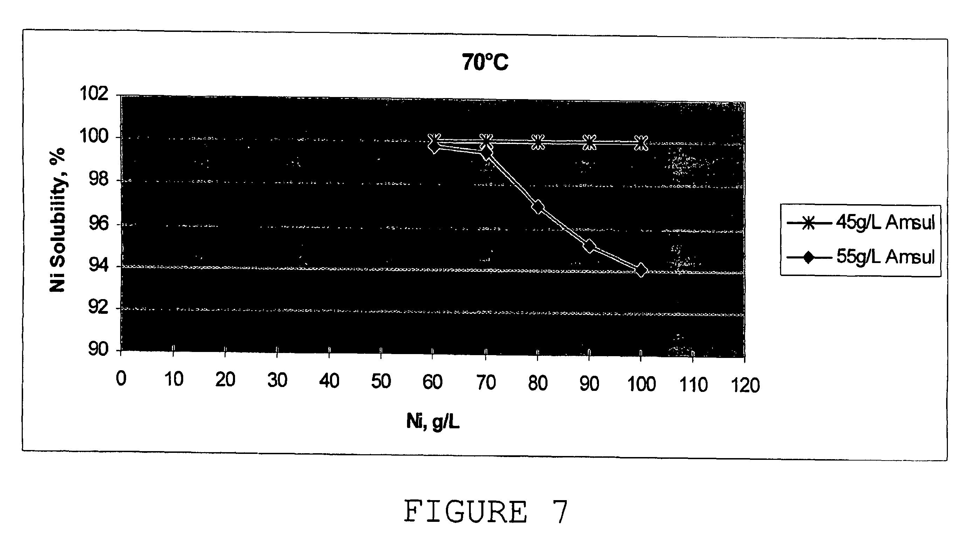

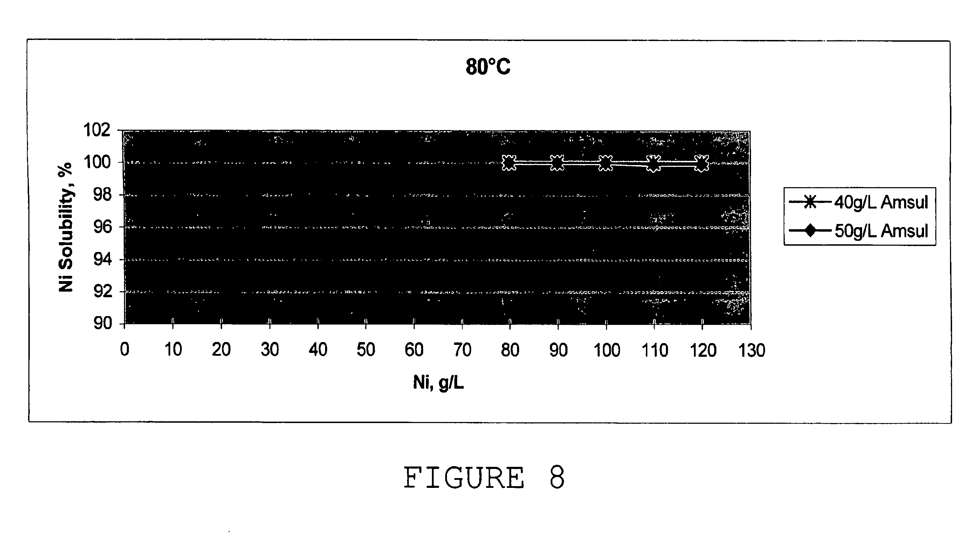

Figures 5 to 8 are plots of the relative nickel solubility over a range of nickel concentrations in the presence of various concentrations of ammonium sulphate at selected temperatures. Figures 5 and 6 are intended as comparative plots at the maximum normal operating temperatures for solvent extraction and show significant precipitation of nickel occurs once the concentration of Ni exceeds 60 g/L in the presence of more than 40 g/L ammonium sulphate. Figures 7 and 8 give an indication of nickel solubility at temperatures within the scope of the preferred embodiment of the present invention. It is clear that the increased temperatures increase the solubility of the valuable metal, in this example nickel, with relatively high concentrations of ammonium sulphate. For example, at 80°C an ammonium sulphate concentration of 50 g/L can be tolerated at nickel strengths of between 80 to 120 g/L.

Now that a preferred embodiment of the invention has been described in some detail it will be apparent to those skilled in the art that the method of removing impurity metals in a solvent extraction circuit has at least the following advantages:
(i) increased concentrations of nickel can be tolerated in the solvent extraction circuit; and
(ii) relatively high temperatures for the extraction circuit are possible with high flash point diluents.

Those skilled in the art will appreciate that the invention described herein is susceptible to variations and modifications other than those specifically described. For example, the impure valuable metal sulphate stream may be cobalt sulphate and is not limited to the concentrated nickel sulphate liquor described. Furthermore, the temperature of the extraction circuit need not be restricted to the temperatures described but rather extend to relatively high temperatures that are effective in increasing the solubility of the valuable metal in the sulphate stream in the presence of added ammonium sulphate. The cationic solvent extractant and diluent described may also vary provided the required impurity metal loading is achieved.

## Claims

1. A method of removing impurity metals from an impure concentrated valuable metal sulphate stream in a solvent extraction circuit, said method involving contacting the impure concentrated valuable metal sulphate stream with a cationic solvent extractant, in the solvent extraction circuit operated at a relatively high temperature of greater than 60°C which is effective in increasing the solubility of the valuable metal in the concentrated sulphate stream containing ammonium sulphate, said extraction circuit also being operated whereby one or more of the impurity metals is loaded on the cationic solvent extractant using ammonia to control the pH whilst a raffinate of the solvent extraction circuit which contains the valuable metal is enriched in ammonium sulphate.

2. A method as defined in claim 1 wherein the high temperature is between 80 to 100°C.

3. A method as defined in any one of the preceding claims wherein the impure valuable metal sulphate stream is a nickel sulphate liquor.

4. A method as defined in claim 3 wherein the nickel sulphate liquor is obtained by acid/oxygen pressure leaching of a nickel/cobalt sulphide precipitate obtained during the processing of nickel lateritic ores.

5. A method as defined in claim 3 or 4 wherein the nickel sulphate liquor is a relatively concentrated liquor.

6. A method as defined in claim 5 wherein the nickel sulphate liquor contains at least 60 g/L Ni.

7. A method as defined in any one of claims 3 to 6 wherein the solvent extraction circuit is designed to remove one or two of said impurity metals, respectively, from the nickel sulphate liquor.

8. A method as defined in claim 7 wherein two extraction circuits are designed to remove Zn and Co, respectively, from the nickel sulphate liquor.

9. A method as defined in any one of the preceding claims wherein the cationic solvent extractant is mixed with an organic diluent of a relatively high flash point.

10. A method as defined in claim 9 wherein the organic diluent is a paraffin based diluent.

11. A method as defined in any one of the preceding claims wherein the cationic solvent extractant comprises a phosphonic acid such as a bis (2,4,4 trimethylpentyl) phosphonic acid.

12. A method as defined in any one of the preceding claims wherein the impurity metals include Co, Zn, Fe, Al, Cr and Cu.

## Patentansprüche

1. Verfahren zum Entfernen von Metallverunreinigungen aus einem verunreinigten konzentrierten Strom eines Sulfats eines wertvollen Metalls in einem Lösungsmittelextraktionskreis, wobei das Verfahren den Kontakt des verunreinigten konzentrierten Stroms eines Sulfats eines wertvollen Metalls mit einem Extraktionsmittel aus einem kationischen Lösungsmittel in dem Lösungsmittelextraktionskreis beinhaltet, der bei einer relativ hohen Temperatur von mehr als 60°C betrieben wird, die eine Verbesserung der Löslichkeit des wertvollen Metalls im konzentrierten Sulfatstrom bewirkt, der Ammoniumsulfat enthält, wobei der Extraktionskreis auch so betrieben wird, daß das Extraktionsmittel aus dem kationischen Lösungsmittel mit einer mehreren Metallverunreinigungen beladen wird, wobei Ammoniak verwendet wird, um den pH-Wert zu steuern, während ein Raffinat des Lösungsmittelextraktionskreises, das das wertvolle Metall enthält, mit Ammoniumsulfat angereichert wird.

2. Verfahren nach Anspruch 1, wobei die hohe Temperatur zwischen 80 und 100°C liegt.

3. Verfahren nach einem der vorstehenden Ansprüche, wobei der verunreinigte Strom eines Sulfats von wertvollem Metall eine Nickelsulfatflüssigkeit ist.

4. Verfahren nach Anspruch 3, wobei die Nickelsulfatflüssigkeit durch Druckbleichen mit Säure/Sauerstoff von gefälltem Nickel/Cobaltsulfid erhalten wird, das bei der Behandlung von Nickellateriterzen erhalten wird.

5. Verfahren nach Anspruch 3 oder 4, wobei die Nickelsulfatflüssigkeit eine relativ konzentrierte Flüssigkeit ist.

6. Verfahren nach Anspruch 5, wobei die Nickelsulfatflüssigkeit mindestens 60 g/l Ni enthält.

7. Verfahren nach einem der Ansprüche 3 bis 6, wobei der Lösungsmittelextraktionskreis so gestaltet ist, daß ein oder zwei der Metallverunreinigungen aus der Nickelsulfatflüssigkeit entfernt werden.

8. Verfahren nach Anspruch 7, wobei zwei Extraktionskreise so gestaltet sind, um Zn bzw. Co aus der Nickelsulfatflüssigkeit zu entfernen.

9. Verfahren nach einem der vorstehenden Ansprüche, wobei das Extraktionsmittel aus einem kationischen Lösungsmittel mit einem organischen Verdünnungsmittel mit einem relativ hohen Flammpunkt gemischt wird.

10. Verfahren nach Anspruch 9, wobei das organische Verdünnungsmittel ein auf Paraffin basierendes Verdünnungsmittel ist.

11. Verfahren nach einem der vorstehenden Ansprüche, wobei das Extraktionsmittel aus einem kationischen Lösungsmittel eine Phosphorsäure, wie Bis(2,4,4-trimethylpentyl)phosphonsäure, ist.

12. Verfahren nach einem der vorstehenden Ansprüche, wobei die Verunreinigungsmetalle Co, Zn, Fe, Al, Cr und Cu einschließen.

## Revendications

1. Procédé d'élimination des impuretés métalliques d'un courant impur de sulfate de métal de valeur concentré dans un circuit d'extraction par solvant, ledit procédé impliquant la mise en contact du courant impur de sulfate de métal de valeur concentré avec un solvant d'extraction cationique, dans le circuit d'extraction par solvant fonctionnant à une température relativement élevée supérieure à 60°C qui est efficace pour faire augmenter la solubilité du métal de valeur dans le courant de sulfate concentré contenant du sulfate d'ammonium, ledit circuit d'extraction fonctionnant également de manière à ce qu'une ou plusieurs des impuretés métalliques soient chargées sur le solvant d'extraction cationique en utilisant de l'ammoniac pour contrôler le pH alors qu'un raffinat du circuit d'extraction par solvant qui contient le métal de valeur est enrichi en sulfate d'ammonium.

2. Procédé selon la revendication 1, dans lequel la température élevée est entre 80 et 100°C.

3. Procédé selon l'une quelconque des revendications précédentes, dans lequel le courant impur de sulfate de métal de valeur est une liqueur de sulfate de nickel.

4. Procédé selon la revendication 3, dans lequel la liqueur de sulfate de nickel est obtenue par lixiviation sous pression d'acide/oxygène d'un précipité de sulfure de nickel/cobalt obtenu durant le traitement de minerais latéritiques de nickel.

5. Procédé selon la revendication 3 ou 4, dans lequel la liqueur de sulfate de nickel est une liqueur relativement concentrée.

6. Procédé selon la revendication 5, dans lequel la liqueur de sulfate de nickel contient au moins environ 60 g/L de Ni.

7. Procédé selon l'une quelconque des revendications 3 à 6, dans lequel le circuit d'extraction par solvant est conçu pour éliminer une ou deux desdites impuretés métalliques, respectivement, de la liqueur de sulfate de nickel.

8. Procédé selon la revendication 7, dans lequel deux circuits d'extraction sont conçus pour éliminer le Zn et le Co, respectivement, de la liqueur de sulfate de nickel.

9. Procédé selon l'une quelconque des revendications précédentes, dans lequel le solvant d'extraction cationique est mélangé avec un diluant organique ayant un point d'éclair relativement élevé.

10. Procédé selon la revendication 9, dans lequel le diluant organique est un diluant à base de paraffine.

11. Procédé selon l'une quelconque des revendications précédentes, dans lequel le solvant d'extraction cationique comprend un acide phosphonique tel qu'un acide bis(2,4,4-triméthylpentyl)phosphonique.

12. Procédé selon l'une quelconque des revendications précédentes, dans lequel les impuretés métalliques comprennent du Co, du Zn, du Fe, de l'Al, du Cr et du Cu.
